# NEUE EUROPÄISCHE PATENTSCHRIFT

(11) **EP 3 612 481 B3**
(45) Veröffentlichungstag dieser Patentschrift: **17.05.2023**
(45) Hinweis auf die Patenterteilung: 09.02.2022
(21) Anmeldenummer: 18720125.6
(22) Anmeldetag: 11.04.2018
(51) Int. Cl.: B65B 41/12, B65H 19/12

(54) **VERBRAUCHSMATERIALHANDHABUNGSVORRICHTUNG ZU EINEM TRANSPORT UND/ODER ZU EINER HANDHABUNG VON ZUMINDEST EINEM VERBRAUCHSMATERIAL, INSBESONDERE EINES VERPACKUNGSMATERIALS**
CONSUMABLE-MATERIAL HANDLING DEVICE FOR TRANSPORTING AND/OR HANDLING AT LEAST ONE CONSUMABLE MATERIAL, IN PARTICULAR PACKAGING MATERIAL
DISPOSITIF DE MANIPULATION DE CONSOMMABLES POUR UN TRANSPORT ET/OU POUR UNE MANIPULATION D'AU MOINS UN CONSOMMABLE, EN PARTICULIER UN MATÉRIAU D'EMBALLAGE

(30) Priorität: 19.04.2017 DE 102017206549
(43) Veröffentlichungstag der Anmeldung: 26.02.2020
(73) Patentinhaber: Syntegon Packaging Systems AG, 8222 Beringen (CH)
(72) Erfinder: WIPF, Alfred, 79798 Jestetten (DE)
(74) Vertreter: Daub, Thomas
(86) Internationale Anmeldenummer: PCT/EP2018/059211
(87) Internationale Veröffentlichungsnummer: WO 2018/192808

(56) Entgegenhaltungen:
- EP-A2- 0 283 086
- EP-A2- 0 334 366
- EP-A2- 0 577 986
- DE-A1- 3 425 734
- DE-A1-102015 208 118
- GB-A- 2 174 686
- JP-A- 2005 231 789
- US-A- 5 730 389

## Beschreibung

### Stand der Technik

Es sind bereits Verbrauchsmaterialhandhabungsvorrichtungen zu einer Handhabung von zumindest einem Verbrauchsmaterial, insbesondere eines Verpackungsmaterials, bekannt, die zumindest eine zumindest teilweise autonome Handhabungseinheit aufweisen, die zumindest dazu vorgesehen ist, das Verbrauchsmaterial handzuhaben. Eine derartige Handhabungsvorrichtung wird z.B. in dem Dokument DE 10 2015 208118 A1 offenbart.

### Offenbarung der Erfindung

Die Erfindung geht aus von einer Verbrauchsmaterialhandhabungsvorrichtung zu einem Transport und/oder zu einer Handhabung von zumindest einem Verbrauchsmaterial, das als Verpackungsmaterial ausgebildet ist, mit zumindest einer zumindest teilweise autonomen Handhabungseinheit, die zumindest dazu vorgesehen ist, das Verbrauchsmaterial handzuhaben, mit zumindest einer, insbesondere zumindest teilweise autonomen, Mobilitätseinheit, an der die Handhabungseinheit angeordnet ist und die zumindest dazu vorgesehen ist, eine, insbesondere zumindest teilweise autonome, Fortbewegung der Handhabungseinheit zu ermöglichen, und mit zumindest einer Zugangsöffnungseinheit, die dazu vorgesehen ist, eine Position einer Zugangsöffnung zu einer Produktions- und/oder Verpackungsmaschine zu erfassen und zumindest ein die Zugangsöffnung der Produktions- und/oder Verpackungsmaschine verschließendes Zugangsverschlusselement zu betätigen.

Es wird vorgeschlagen, dass die Verbrauchsmaterialhandhabungsvorrichtung zumindest eine Verbindungsmittelaufbringungseinheit umfasst, die dazu vorgesehen ist, zumindest ein Verbindungsmittel auf das zumindest eine Verbrauchsmaterial aufzubringen, insbesondere zu einer Ermöglichung einer Verbindung des zumindest einen Verbrauchsmaterials mit einem weiteren Verbrauchsmaterial, wobei die Verbindungsmittelaufbringungseinheit dazu vorgesehen ist, ein als Klebemittel, insbesondere Klebeband, ausgebildetes Verbindungsmittel auf das zumindest eine Verbrauchsmaterial aufzubringen, insbesondere um nach einer, insbesondere zumindest teilweisen autonomen, Zuführung des Verbrauchsmaterials zur Produktions- und/oder Verpackungsmaschine das zugeführte Verbrauchsmaterial mit einem bereits in der Produktions- und/oder Verpackungsmaschine angeordneten weiteren Verbrauchsmaterial zu verbinden. Unter einer "Fortbewegung" soll insbesondere eine aktive oder passive Ortsveränderung von zumindest einem Element und/oder einer Einheit in einem Raumsystem verstanden werden. Die Mobilitätseinheit kann dazu vorgesehen sein, die Handhabungseinheit aktiv fortzubewegen, insbesondere mittels einer Antriebseinheit der Mobilitätseinheit. Die Mobilitätseinheit kann alternativ oder zusätzlich dazu vorgesehen sein, eine Fortbewegung der Handhabungseinheit infolge einer Einwirkung einer äußeren Kraft, wie beispielsweise durch einen Bediener, zu ermöglichen, insbesondere mittels zumindest eines Rollelements, eines Gleitelements, eines Führungsschienenelements o. dgl. der Mobilitätseinheit. Unter "vorgesehen" soll insbesondere speziell programmiert, speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt. Die Mobilitätseinheit umfasst vorzugsweise zumindest ein als Rolle oder Rad ausgebildetes Rollelement, mittels dessen die Handhabungseinheit relativ zu einem Untergrund fortbewegbar ist. Das Rollelement kann als Smartwheel ausgebildet sein, das eine integrierte Antriebseinheit und eine integrierte Sensoreinheit aufweist, um einen Bediener bei einem Schiebe- oder Ziehvorgang der Mobilitätseinheit und/oder der Handhabungseinheit auf eine, einem Fachmann bereits bekannte Art und Weise zu unterstützen. Alternativ oder zusätzlich ist es denkbar, dass die Mobilitätseinheit ein Magnetschienenführungselement, ein Schienenführungselement o. dgl. aufweist, mittels dessen eine Fortbewegung der Handhabungseinheit ermöglichbar ist. Beispielsweise ist es denkbar, dass die Mobilitätseinheit dazu vorgesehen ist, mit einem Magnetschienentransportsystem oder einem Führungsschienentransportsystem in einer Produktionshalle zusammenzuwirken, um eine Fortbewegung der Handhabungseinheit zu ermöglichen. Die Mobilitätseinheit umfasst vorzugsweise zumindest ein Gestell oder einen Rahmen, an dem die Handhabungseinheit angeordnet ist, insbesondere zumindest teilweise daran fixiert ist. Vorzugsweise ist zumindest eine Grundplatte der Handhabungseinheit an dem Gestell oder dem Rahmen der Mobilitätseinheit fixiert. Mobilitätselemente, wie beispielsweise Rollen, Räder, Ketten, Schienenräder, Luftkissenelemente o. dgl. der Mobilitätseinheit sind vorzugsweise an dem Gestell oder dem Rahmen der Mobilitätseinheit angeordnet, insbesondere beweglich an dem Gestell oder dem Rahmen gelagert. Bevorzugt umfasst die Mobilitätseinheit zumindest eine Bremseinheit, die dazu vorgesehen ist, eine Bewegung von Mobilitätselementen der Mobilitätseinheit zu unterbinden oder eine Geschwindigkeit zu reduzieren. Die Bremseinheit kann als Feststellbremse und/oder als Fahrtbremse ausgebildet sein. Die Bremseinheit weist vorzugsweise eine, einem Fachmann bereits bekannte Ausgestaltung auf. Die Verbrauchsmaterialhandhabungsvorrichtung, insbesondere zumindest die Handhabungseinheit und/oder die Mobilitätseinheit, kann/können vorzugsweise derart ausgebildet sein, dass diese als ein mit einem Bediener kollaborierender Roboter agieren, insbesondere in zumindest einem Betriebsmodus.

Die Mobilitätseinheit umfasst vorzugsweise, insbesondere in zumindest einer Ausgestaltung der Verbrauchsmaterialhandhabungsvorrichtung, zumindest eine Antriebseinheit, insbesondere zumindest eine Elektromotoreinheit, zu einem aktiven Antrieb zumindest eines Mobilitätselements der Mobilitätseinheit. Es ist denkbar, dass die Mobilitätseinheit eine Vielzahl an Antriebseinheiten umfasst, wobei jeweils eine der Antriebseinheiten einem einzelnen Mobilitätselement zugeordnet ist. Es ist jedoch auch denkbar, dass die Mobilitätseinheit eine einzelne Antriebseinheit, insbesondere eine einzelne Elektromotoreinheit, aufweist, die dazu vorgesehen ist, insbesondere über eine Abtriebseinheit, wie beispielsweise eine Getriebeeinheit o. dgl., eine Vielzahl an Mobilitätselementen der Mobilitätseinheit anzutreiben.

Die Handhabungseinheit umfasst vorzugsweise zumindest einen Roboterarm, insbesondere einen mehrachsigen Roboterarm. Der Roboterarm ist vorzugsweise mittels der Grundplatte der Handhabungseinheit an der Mobilitätseinheit, insbesondere dem Gestell oder dem Rahmen der Mobilitätseinheit, angeordnet. Bevorzugt weist der Roboterarm mehr als eine Bewegungsachse auf. Vorzugsweise weist der Roboterarm mehr als zwei, insbesondere mehr als vier und bevorzugt mehr als sechs, Bewegungsachsen auf. Die Handhabungseinheit umfasst bevorzugt zumindest ein am Roboterarm angeordnetes Handhabungselement. Das Handhabungselement kann beispielsweise als ein am Roboterarm angeordneter Greifer, eine am Roboterarm angeordnete Aufnahmegabel, ein am Roboterarm angeordneter Aufnahmedorn o. dgl. ausgebildet sein. Das Handhabungselement ist vorzugsweise beweglich gelagert, insbesondere mittels des Roboterarms. Die Handhabungseinheit ist vorzugsweise dazu vorgesehen, Verbrauchsmaterial, insbesondere Verpackungsmaterial, handzuhaben, insbesondere zumindest teilweise autonom einer Produktions- und/oder Verpackungsmaschine zuzuführen. Das Verbrauchsmaterial ist vorzugsweise als Verpackungsmaterial, insbesondere als Verpackungsfolie, ausgebildet, das als Rollenware ausgebildet ist. Die Handhabungseinheit ist vorzugsweise dazu vorgesehen, Verpackungsfolienrollen handzuhaben, insbesondere zumindest teilweise autonom einer Produktions- und/oder Verpackungsmaschine zuzuführen oder von dieser abzuführen. Es ist jedoch auch denkbar, dass die Handhabungseinheit zu einer Handhabung eines anderen, einem Fachmann als sinnvoll erscheinenden Verbrauchsmaterials vorgesehen ist, wie beispielsweise zu einer Handhabung eines als Leim, als Kleber, als Kartonflachzuschnitt, als Filmrolle, als Papierrohling, als Kartonrolle, als Papier-Leaflet o. dgl. ausgebildetes Verbrauchsmaterial.

Die Verbrauchsmaterialhandhabungsvorrichtung kann zumindest eine Reinigungseinheit, insbesondere eine Saug- und/oder Kehreinheit, aufweisen, die dazu vorgesehen ist, Rückstände von dem zumindest einen Verbrauchsmaterial zu entfernen, insbesondere aufzusaugen und/oder wegzukehren. Die Reinigungseinheit kann an der Handhabungseinheit und/oder an der Mobilitätseinheit angeordnet sein. Bei einer Anordnung der Reinigungseinheit an der Mobilitätseinheit ist die Reinigungseinheit vorzugsweise an einer einem Untergrund zugewandten Seite der Mobilitätseinheit angeordnet, insbesondere um eine Reinigung eines Untergrunds, wie beispielsweise eines Bodens einer Produktionshalle, zu ermöglichen. Bei einer Anordnung der Reinigungseinheit an der Handhabungseinheit ist die Reinigungseinheit vorzugsweise an dem zumindest einen Handhabungselement angeordnet. Es ist jedoch auch denkbar, dass die Reinigungseinheit der Verbrauchsmaterialhandhabungsvorrichtung an einer anderen, einem Fachmann als sinnvoll erscheinenden Position angeordnet ist.

Die Handhabungseinheit umfasst vorzugsweise zumindest eine Recheneinheit zu einer Steuerung und/oder Regelung des Roboterarms und/oder des Handhabungselements. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Die Recheneinheit kann alternativ oder zusätzlich zu einer Steuerung und/oder Regelung der zumindest einen Antriebseinheit der Mobilitätseinheit vorgesehen sein. Vorzugsweise kann die Recheneinheit alternativ oder zusätzlich zu einer Steuerung und/oder Regelung eines autonomen Fahrbetriebs der Mobilitätseinheit vorgesehen sein. Zu einer Realisierung eines autonomen Fahrbetriebs der Mobilitätseinheit umfasst die Verbrauchsmaterialhandhabungsvorrichtung vorzugsweise zumindest eine Sensoreinheit, die dazu vorgesehen ist, Umgebungskenngrößen zu erfassen, die von der Recheneinheit zu einer Steuerung und/oder Regelung eines autonomen Fahrbetriebs der Mobilitätseinheit verarbeitbar sind. Die Sensoreinheit kann beispielsweise zumindest eine Kamera, zumindest ein Ultraschallsensorelement, zumindest ein Radarelement, zumindest ein Laserscannerelement, zumindest ein Magnetschleifenelement o. dgl. aufweisen, das oder die dazu vorgesehen ist/sind zumindest eine Umgebungskenngröße auf eine, einem Fachmann bereits bekannte Art und Weise zu erfassen. Die Recheneinheit ist insbesondere dazu vorgesehen, auf eine, einem Fachmann bereits bekannte Art und Weise die zumindest eine erfasste Umgebungskenngröße zu verarbeiten, um zumindest eine Steuerung und/oder Regelung eines autonomen Fahrbetriebs der Mobilitätseinheit zu realisieren. Vorzugsweise ist die Recheneinheit alternativ oder zusätzlich dazu vorgesehen, die Handhabungseinheit in Abhängigkeit von der erfassten Umgebungskenngrö-ße zu steuern und/oder zu regeln. Insbesondere ist denkbar, dass beispielsweise mittels einer Kamera der Sensoreinheit eine Erfassung eines Verbrauchsmaterials erfolgen kann, insbesondere um zu überwachen, dass vor einem Einsetzen eines Verbrauchsmaterials in eine Produktions- und/oder Verpackungsmaschine Materialrückstände und/oder Lagerelemente, insbesondere leere Rollen, von zuvor bereits in die Produktions- und/oder Verpackungsmaschine eingesetzten Verbrauchsmaterialien entfernt worden sind. Die Sensoreinheit kann vorzugsweise derart ausgebildet sein, dass ein die Verbrauchsmaterialhandhabungsvorrichtung umgebender Bereich gescannt wird und in Sicherheitsfelder eingeteilt wird. Die Recheneinheit kann in Abhängigkeit von einer Unterteilung eines Bereichs in Sicherheitsfelder die Verbrauchsmaterialhandhabungsvorrichtung in unterschiedlichen Betriebsarten betreiben. Beispielsweise ist denkbar, dass die Sicherheitsfelder unterschiedliche Distanzbereiche um die Verbrauchsmaterialhandhabungsvorrichtung definieren. Es ist denkbar, dass die Verbrauchsmaterialhandhabungsvorrichtung beispielsweise in Abhängigkeit von einer Erfassung von bedienerfreien Sicherheitsfeldern, d.h. es befindet sich keine Person in einem der vorgegebenen Distanzbereich, mit einer hohen Arbeitsgeschwindigkeit betreibbar ist, wobei eine Arbeitsgeschwindigkeit in Abhängigkeit von einer Distanz des Bedieners veränderbar ist, wie beispielsweise eine Verringerung der Arbeitsgeschwindigkeit bei einer Verringerung eines Abstands eines Bedieners relativ zur Verbrauchsmaterialhandhabungsvorrichtung. Mittels einer Erfassung einer Umgebungskenngröße ist beispielsweise auch ein Aktionsgebiet der Handhabungseinheit und/oder der Mobilitätseinheit vorzugsweise überwachbar. Es ist vorteilhaft eine Annäherung eines Bedieners an die Handhabungseinheit und/oder an die Mobilitätseinheit erfassbar. Vorzugsweise ist eine Annäherung eines Bedieners an die Handhabungseinheit und/oder an die Mobilitätseinheit mittels der Recheneinheit derart verarbeitbar, dass bei einer Gefährdung eines Bedieners durch die Handhabungseinheit und/oder durch die Mobilitätseinheit infolge einer Unterschreitung eines Sicherheitsabstands beispielsweise eine Notstoppfunktion einleitbar ist, eine Bewegung um den Bediener herum einleitbar ist o. dgl.

Mittels der erfindungsgemäßen Ausgestaltung kann vorteilhaft eine bedienerfreundliche Handhabung von Verbrauchsmaterial, insbesondere von Verpackungsmaterial, ermöglicht werden. Es können/kann vorteilhaft eine bedienerunterstützende Handhabung und/oder ein bedienerunterstützender Transport von Verbrauchsmaterial, insbesondere von Verpackungsmaterial, ermöglicht werden. Es kann vorteilhaft eine Entlastung eines Bedieners realisiert werden. Es kann vorteilhaft ein hoher Automatisierungsgrad ermöglicht werden.

Des Weiteren wird vorgeschlagen, dass die Verbrauchsmaterialhandhabungsvorrichtung zumindest eine Bereitstellungs- und/oder Lagereinheit umfasst, die zumindest ein Aufnahmeelement aufweist, an dem zumindest das mittels der Handhabungseinheit handzuhabende Verbrauchsmaterial anordenbar, insbesondere bereitstellbar und/oder lagerbar ist. Die Bereitstellungs- und/oder Lagereinheit kann als separate Einheit ausgebildet sein, die insbesondere beispielsweise mittels einer Kupplungseinheit, insbesondere einer Anhängerkupplungseinheit, lösbar mit der Mobilitätseinheit verbindbar ist. Die Bereitstellungs- und/oder Lagereinheit kann eine weitere Mobilitätseinheit umfassen, die zu einer Ermöglichung einer Fortbewegung der Bereitstellungs- und/oder Lagereinheit vorgesehen ist, insbesondere zu einer zumindest teilweise autonomen Fortbewegung der Bereitstellungs- und/oder Lagereinheit. Es ist beispielswiese denkbar, dass die Bereitstellungs- und/oder Lagereinheit nach einer Erkennung eines Leerstands an Verbrauchsmaterial mittels der weiteren Mobilitätseinheit autonom zu einem Lager fortbewegbar ist, insbesondere um benötigtes Verbrauchsmaterial aufzunehmen. Die Bereitstellungs- und/oder Lagereinheit kann am Gestell oder am Rahmen der Mobilitätseinheit angeordnet sein, insbesondere derart, dass die Bereitstellungs- und/oder Lagereinheit gemeinsam mit der Handhabungseinheit mittels der Mobilitätseinheit fortbewegbar ist, insbesondere zumindest teilweise autonom fortbewegbar ist. Das zumindest eine Aufnahmeelement der Bereitstellungs- und/oder Lagereinheit kann beispielsweise als Aufnahmeausnehmung, als Aufnahmegabel, als Aufnahmezapfen, als Aufnahmenut, als Aufnahmeschale, als Aufnahmemulde o. dgl. ausgebildet sein und dazu vorgesehen sein, Verbrauchsmaterial aufzunehmen. Besonders bevorzugt ist das zumindest eine Aufnahmeelement dazu vorgesehen, Verpackungsmaterial in Form von Verpackungsfolienrollen aufzunehmen, insbesondere bereitzustellen und/oder zu lagern. Alternativ oder zusätzlich ist das zumindest eine Aufnahmeelement dazu vorgesehen, als Leerrollen ausgebildetes Verbrauchsmaterial aufzunehmen. Es ist jedoch auch denkbar, dass die Bereitstellungs- und/oder Lagereinheit zu einer Aufnahme von zumindest einem als Leerrolle ausgebildeten Verbrauchsmaterial zumindest ein weiteres Aufnahmeelement aufweist. Das zumindest eine Aufnahmeelement und das zumindest eine weitere Aufnahmeelement können zumindest im Wesentlichen analog ausgebildet sein oder verschieden voneinander ausgebildet sein. Denkbar ist auch, dass die Bereitstellungs- und/oder Lagereinheit zumindest ein zusätzliches Aufnahmeelement aufweist, das derart ausgebildet ist, dass ein als Verpackungsfolienrolle ausgebildetes Verbrauchsmaterial zumindest mit einem Teilbereich, an dem zumindest ein Verbindungsmittel, insbesondere ein Klebestreifen oder ein Klebeband, angeordnet ist, derart aufnehmbar ist, dass eine weitestgehend staubgeschützte Anordnung des Teilbereichs realisierbar ist, wie beispielsweise durch eine, insbesondere mit zumindest einer Dichtlippe versehenen, Aufnahmemulde o. dgl. Mittels der erfindungsgemäßen Ausgestaltung kann vorteilhaft eine komfortable Bereitstellung von Verbrauchsmaterial ermöglicht werden, das insbesondere in einem Nahbereich der Handhabungseinheit anordenbar, insbesondere bereitstellbar und/oder lagerbar, ist. Es kann vorteilhaft eine bedienerfreundliche Handhabung von Verbrauchsmaterial, insbesondere von Verpackungsmaterial, ermöglicht werden. Es kann vorteilhaft ein hoher Automatisierungsgrad realisiert werden.

Ferner wird vorgeschlagen, dass die Verbrauchsmaterialhandhabungsvorrichtung zumindest eine Bereitstellungs- und/oder Lagereinheit und zumindest eine Messeinheit umfasst, die an der Bereitstellungs- und/oder Lagereinheit angeordnet ist und zu einer Bestimmung einer Masse des zumindest einen Verbrauchsmaterials vorgesehen ist. Bevorzugt umfasst die Messeinheit zumindest ein Messelement, das zu einer Bestimmung einer Masse des zumindest einen Verbrauchsmaterials vorgesehen ist. Vorzugsweise ist das zumindest eine Messelement an der an der Bereitstellungs- und/oder Lagereinheit angeordnet. Insbesondere ist das zumindest eine Messelement an der Bereitstellungs- und/oder Lagereinheit angeordnet, die an der Mobilitätseinheit, insbesondere an dem Gestell oder an dem Rahmen der Mobilitätseinheit, angeordnet ist. Das zumindest eine Messelement ist vorzugsweise als Waage ausgebildet. Es ist jedoch auch denkbar, dass die Messeinheit die Masse indirekt bestimmt oder berechnet, insbesondere infolge einer Messung einer Verbrauchsmaterialkenngröße, die verschieden ist von einer Masse des Verbrauchsmaterials, wie beispielsweise einer als Abmessung, insbesondere als Durchmesser, ausgebildeten Verbrauchsmaterialkenngröße o. dgl. Denkbar ist auch, dass die Messeinheit dazu vorgesehen ist, in Abhängigkeit von einem Abgleich von gemessenen Verbrauchsmaterialkenngrößen, die verschieden sind von einer Masse des Verbrauchsmaterials, wie beispielsweise einer als Abmessung, insbesondere als Durchmesser, ausgebildeten Verbrauchsmaterialkenngröße o. dgl., mit in einer Datenbank hinterlegten Bezugswerten eine Masse zu bestimmen. Denkbar ist auch, dass die Masse in Abhängigkeit von einer Leistungskenngröße, wie beispielsweise ein Strom, zumindest einer Antriebseinheit der Handhabungseinheit, insbesondere einer Elektromotoreinheit des Roboterarms, bestimmbar ist. Bevorzugt ist zumindest eine Kenngröße der Handhabungseinheit und/oder der Mobilitätseinheit mittels der Recheneinheit in Abhängigkeit von der erfassten Masse steuerbar und/oder regelbar. Beispielsweise ist es denkbar, dass eine Geschwindigkeit, insbesondere eine Verfahrgeschwindigkeit, der Handhabungseinheit und/oder der Mobilitätseinheit mittels der Recheneinheit in Abhängigkeit von einer Masse eines handzuhabenden und/oder zu transportierenden Verbrauchsmaterials steuerbar und/oder regelbar ist. Vorzugsweise umfasst die Verbrauchsmaterialhandhabungsvorrichtung zumindest eine Positions- und/oder Lagebestimmungseinheit, die dazu vorgesehen ist, eine Position und/oder eine Lage eines Verbrauchsmaterials, der Handhabungseinheit und/oder der Mobilitätseinheit zu bestimmen und/oder zu erfassen. Die mittels der Positions- und/oder Lagebestimmungseinheit erfasste und/oder bestimmte Position und/oder Lage eines Verbrauchsmaterials ist vorzugsweise mittels der Recheneinheit zu einer Steuerung und/oder Regelung der Handhabungseinheit und/oder der Mobilitätseinheit verarbeitbar. Mittels der erfindungsgemäßen Ausgestaltung kann vorteilhaft eine Masse eines handzuhabenden Verbrauchsmaterials frühzeitig bestimmt werden, insbesondere um frühzeitig einen Bediener bei einer Arbeit unterstützen zu können oder zumindest einen Hinweis ausgeben zu können, dass es als sinnvoll erachtet wird eine unterstützende Handlung durchzuführen, insbesondere mittels der Handhabungseinheit. Es kann vorteilhaft eine komfortable Bereitstellung von Verbrauchsmaterial ermöglicht werden, das insbesondere in einem Nahbereich der Handhabungseinheit anordenbar, insbesondere bereitstellbar und/oder lagerbar, ist. Es kann vorteilhaft eine bedienerfreundliche Handhabung von Verbrauchsmaterial, insbesondere von Verpackungsmaterial, ermöglicht werden. Es kann vorteilhaft ein hoher Automatisierungsgrad realisiert werden.

Zudem wird vorgeschlagen, dass die Verbrauchsmaterialhandhabungsvorrichtung zumindest eine Erfassungseinheit zu einer Erfassung zumindest einer materialspezifischen Kenngröße des zumindest einen Verbrauchsmaterials aufweist. Die Erfassungseinheit weist bevorzugt zumindest ein Erfassungselement auf, das bevorzugt an der Handhabungseinheit, insbesondere am Roboterarm oder am Handhabungselement, angeordnet ist. Das zumindest eine Erfassungselement kann dazu vorgesehen sein, beispielsweise ein Anfang eines als Verpackungsfolienrolle ausgebildeten Verbrauchsmaterials, eine Position eines Klebebands an einem als Verpackungsfolienrolle ausgebildeten Verbrauchsmaterial, eine Position einer Verbindungsstelle eines als Verpackungsfolienrolle ausgebildeten Verbrauchsmaterials, einen am Verbrauchsmaterial angebrachten maschinenlesbaren Code, eine Dichte des Verbrauchsmaterials, eine Art des Verbrauchsmaterials, eine Beschädigungsstelle des Verbrauchsmaterials o. dgl. zu erfassen. Die Erfassungseinheit kann eine Vielzahl an Erfassungselementen aufweisen, die zu einer Erfassung von unterschiedlichen materialspezifischen Kenngrößen des zumindest einen Verbrauchsmaterials vorgesehen sind. Mittels der erfindungsgemäßen Ausgestaltung kann vorteilhaft komfortabel eine Kenngröße des Verbrauchsmaterials erfasst werden, die vorzugsweise für eine Handhabung und/oder einen Transport des Verbrauchsmaterials relevant ist. Es kann vorteilhaft ein hoher Automatisierungsgrad realisiert werden.

Das Verbrauchsmaterial und das weitere Verbrauchsmaterial sind vorzugsweise als Rollenware ausgebildet, insbesondere als Verpackungsfolienrollenware. Die Produktions- und/oder Verpackungsmaschine umfasst vorzugsweise zumindest eine Schlauchbeutelverpackungseinheit, die mittels der Verbrauchsmaterialhandhabungsvorrichtung mit Verbrauchsmaterial versorgbar ist. Bevorzugt ist die Verbindungsmittelaufbringungseinheit dazu vorgesehen, an ein freies Ende eines neu in die Produktions- und/oder Verpackungsmaschine einzusetzenden Verbrauchsmaterials, insbesondere einer Verpackungsfolienrollenware, ein als Klebemittel, insbesondere Klebeband, ausgebildetes Verbindungsmittel anzubringen. Vorzugsweise ist die Handhabungseinheit dazu vorgesehen, das Verbrauchsmaterial, insbesondere die Verpackungsfolienrollenware, in die Produktions- und/oder Verpackungsmaschine einzusetzen und das freie Ende mit dem daran angeordneten Verbindungsmittels mit einem weiteren Verbrauchsmaterial, das bereits in der Produktions- und/oder Verpackungsmaschine angeordnet ist, zu verbinden. Mittels der erfindungsgemäßen Ausgestaltung kann vorteilhaft ein hoher Automatisierungsgrad realisiert werden. Es kann vorteilhaft ein weitestgehend fließender Wechsel von Verbrauchsmaterialien ermöglicht werden.

Ferner wird vorgeschlagen, dass die Verbrauchsmaterialhandhabungsvorrichtung zumindest eine, insbesondere drahtlose, Kommunikationseinheit zu einem Austausch von elektronischen Daten mit einer externen Einheit umfasst, wobei in Abhängigkeit von einem Austausch von elektronischen Daten zumindest eine Handhabung und/oder ein Transport des zumindest einen Verbrauchsmaterials erfolgt. Die Kommunikationseinheit ist vorzugsweise als kabellose Kommunikationseinheit ausgebildet. Hierbei kann die Kommunikationseinheit als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit o. dgl. ausgebildet sein. Besonders bevorzugt ist die Kommunikationseinheit zu einer bidirektionalen Datenübertragung vorgesehen. In einer alternativen Ausgestaltung ist die Kommunikationseinheit als kabelgebundene Kommunikationseinheit ausgebildet, wie beispielsweise als LAN-Kommunikationseinheit, als USB-Kommunikationseinheit o. dgl. Vorzugsweise ist die externe Einheit als zumindest eine weitere Verbrauchsmaterialhandhabungsvorrichtung, als die Produktions- und/oder Verpackungsmaschine, als Verbrauchsmateriallager, als zentrale Recheneinheit zu einer Steuerung und/oder Regelung eines Betriebs an einem Produktionsstandort, als Smartphone, als Laptop, als Tablet, als Smartwatch o. dgl. ausgebildet. Beispielsweise ist es denkbar, dass in Abhängigkeit von einer Übertragung von elektronischen Daten mittels der Kommunikationseinheit zwischen der Verbrauchsmaterialhandhabungsvorrichtung und der Produktions- und/oder Verpackungsmaschine eine Initiierung eines Verbrauchsmaterialwechsels oder einer Verbrauchsmaterialbestückung erfolgt. Eine Übertragung von Daten zwischen der Verbrauchsmaterialhandhabungsvorrichtung und der Produktions- und/oder Verpackungsmaschine kann direkt oder indirekt, wie beispielsweise über einen Server, einen Router o. dgl., erfolgen. Denkbar ist beispielsweise auch, dass in Abhängigkeit von einer Übertragung von elektronischen Daten mittels der Kommunikationseinheit auf eine externe Einheit, insbesondere einer zentralen Recheneinheit, oder umgekehrt, eine Initiierung einer Be- oder Entladung der Bereitstellungs- und/oder Lagereinheit erfolgt. Weitere, einem Fachmann als sinnvoll erscheinende Initiierungen zu einer Steuerung und/oder Regelung eines zumindest teilweise autonomen Betriebs der Verbrauchsmaterialhandhabungsvorrichtung sind ebenfalls denkbar. Die elektronischen Daten, die zwischen der Kommunikationseinheit und der externen Einheit austauschbar sind, können beispielsweise einen Standort der Verbrauchsmaterialhandhabungsvorrichtung betreffen, einen Lagerort von Verbrauchsmaterial betreffen, eine Formatkenngröße eines handzuhabenden und/oder zu transportierenden Verbrauchsmaterials betreffen, Lauf- und/oder Bewegungszeiten der Verbrauchsmaterialhandhabungsvorrichtung betreffen, eine Anzahl an Wechseln von Verbrauchsmaterial betreffen, eine Anzahl an erkannten fehlerhaft vorbereiteten Verbrauchsmaterialien betreffen, eine Anzahl an Akkuladezyklen und/oder Akkuladezeiten betreffen, Steuer- und/oder Regelungsdaten betreffen o. dgl. Mittels der erfindungsgemäßen Ausgestaltung kann vorteilhaft eine Kommunikation der Verbrauchsmaterialhandhabungsvorrichtung mit einer externen Einheit realisiert werden, die vorteilhaft zu einer bedarfsgerechten Steuerung und/oder Regelung der Verbrauchsmaterialhandhabungsvorrichtung nutzbar ist. Es kann vorteilhaft eine zuverlässige Überwachung von Funktionen der Verbrauchsmaterialhandhabungsvorrichtung erreicht werden. Es kann vorteilhaft ein hoher Automatisierungsgrad realisiert werden.

Zudem wird vorgeschlagen, dass die Verbrauchsmaterialhandhabungsvorrichtung zumindest eine Umverpackungsöffnungseinheit, insbesondere eine Schneid- und/oder Brennereinheit, umfasst, die zu einer Öffnung zumindest einer das zumindest eine Verbrauchsmaterial zumindest teilweise umgebenden Umverpackung, insbesondere einer Schutzfolie, vorgesehen ist. Die Umverpackungsöffnungseinheit ist vorzugsweise am Roboterarm angeordnet. Bevorzugt ist die Umverpackungsöffnungseinheit mittels des Roboterarms beweglich gelagert. Alternativ oder zusätzlich ist es denkbar, dass die Umverpackungsöffnungseinheit beweglich am Roboterarm gelagert ist, insbesondere bei einer Ausgestaltung der Umverpackungsöffnungseinheit als klappbare Schneideinheit, die beispielsweise eine klappbare Klinge aufweist o. dgl. Die Umverpackungsöffnungseinheit ist vorzugsweise dazu vorgesehen, eine eine Vielzahl an Verbrauchsmaterialien gemeinsam umgebende Umverpackung, insbesondere eine Schutzfolie, zu öffnen. Insbesondere ist die Vielzahl an Verbrauchsmaterialien gemeinsam auf einer Liefereinheit, insbesondere einer Palette, angeordnet und mittels einer als Schutzfolie ausgebildeten Umverpackung gemeinsam umgeben, wobei die Umverpackungsöffnungseinheit vorzugsweise dazu vorgesehen ist, die Umverpackung zu öffnen, insbesondere zu schneiden oder aufzuschmelzen. Mittels der erfindungsgemäßen Ausgestaltung kann vorteilhaft eine komfortable Öffnung einer Umverpackung realisiert werden und eine darauf folgende automatische Ab- und/oder Entnahme von Verbrauchsmaterial ermöglicht werden. Es kann vorteilhaft ein hoher Automatisierungsgrad realisiert werden.

Eine Erfassung einer Zugangsöffnung zu einer Produktions- und/oder Verpackungsmaschine kann beispielsweise mittels einer Übertragung von elektronischen Daten über die Kommunikationseinheit erfolgen, insbesondere infolge einer Übertragung von Standort- und/oder Ausrichtungsdaten der Produktions- und/oder Verpackungsmaschine und einem Abgleich mit Standortdaten der Verbrauchsmaterialhandhabungsvorrichtung. Es ist jedoch auch denkbar, dass eine Erfassung einer Zugangsöffnung zu einer Produktions- und/oder Verpackungsmaschine mittels der Sensoreinheit der Verbrauchsmaterialhandhabungsvorrichtung, insbesondere mittels einer Kamera, erfolgt. Die Zugangsöffnungseinheit kann zumindest teilweise einteilig mit der Handhabungseinheit ausgebildet sein, insbesondere kann ein Öffnungselement der Zugangsöffnungseinheit einteilig mit dem Handhabungselement ausgebildet sein. Die Zugangsöffnungseinheit ist insbesondere zumindest teilweise an der Handhabungseinheit angeordnet. Die Zugangsöffnungseinheit ist vorzugsweise dazu vorgesehen, ein die Zugangsöffnung der Produktions- und/oder Verpackungsmaschine verschließendes Zugangsverschlusselement, insbesondere eine Zugangstür, zu öffnen oder zu schließen, insbesondere zu einer Ermöglichung eines Wechsels von in der Produktions- und/oder Verpackungsmaschine anordenbarem Verbrauchsmaterial. Es ist jedoch auch denkbar, dass das Zugangsverschlusselement und/oder ein das Zugangsverschlusselement verschließendes Verriegelungselement mittels einer Antriebseinheit der Produktions- und/oder Verpackungsmaschine betätigbar ist, insbesondere in Abhängigkeit von einer Übertragung von elektronischen Daten zwischen der Verbrauchsmaterialhandhabungsvorrichtung und der Produktions- und/oder Verpackungsmaschine. Mittels der erfindungsgemäßen Ausgestaltung kann vorteilhaft ein zumindest teilweiser autonomer Wechselvorgang von Verbrauchsmaterial erreicht werden. Es kann vorteilhaft ein hoher Automatisierungsgrad realisiert werden.

Ferner wird ein Produktions- und/oder Verpackungssystem mit zumindest einer Produktions- und/oder Verpackungsmaschine und mit zumindest einer erfindungsgemäßen Verbrauchsmaterialhandhabungsvorrichtung zu einer Belieferung und/oder Bestückung der Produktions- und/oder Verpackungsmaschine mit zumindest einem Verbrauchsmaterial vorgeschlagen. Bevorzugt umfasst die Produktions- und/oder Verpackungsmaschine zumindest eine Schlauchbeutelverpackungseinheit, die mittels der Verbrauchsmaterialhandhabungsvorrichtung mit Verbrauchsmaterial versorgbar ist. Es ist jedoch auch denkbar, dass die Produktions- und/oder Verpackungsmaschine weitere, einem Fachmann als sinnvoll erscheinende Einheiten aufweist, die mittels der Verbrauchsmaterialhandhabungsvorrichtung mit Verbrauchsmaterial versorgbar sind. Mittels der erfindungsgemäßen Ausgestaltung kann vorteilhaft ein zumindest teilweiser autonomer Wechselvorgang von Verbrauchsmaterial erreicht werden. Es kann vorteilhaft ein hoher Automatisierungsgrad realisiert werden.

Zudem wird vorgeschlagen, dass das Produktions- und/oder Verpackungssystem zumindest eine Ladestation umfasst, die dazu vorgesehen ist, eine Energiespeichereinheit der Verbrauchsmaterialhandhabungsvorrichtung mit Energie zu versorgen. Die Ladestation ist vorzugsweise als stationäre Ladestation ausgebildet. Es ist jedoch auch denkbar, dass die Ladestation mobil ausgebildet ist und zumindest teilweise autonom fortbewegbar ist. Die Ladestation kann als kontaktlose Ladestation, wie beispielsweise als Induktionsladestation, oder als Kontaktladestation, die insbesondere zumindest eine Ladekontakteinheit aufweist, ausgebildet sein. Die Verbrauchsmaterialhandhabungsvorrichtung ist vorzugsweise dazu vorgesehen, bei einer Erkennung einer geringen Energiekapazität einer Energiespeichereinheit, insbesondere einer Akkupackeinheit, der Verbrauchsmaterialhandhabungsvorrichtung autonom die Ladestation anzufahren und einen Ladevorgang zu initiieren. Es ist jedoch auch denkbar, dass die Ladestation mobil ausgebildet ist und zumindest teilweise autonom fortbewegbar ist, wobei in Abhängigkeit von einer Übertragung von elektronischen Daten zwischen der Kommunikationseinheit der Verbrauchsmaterialhandhabungsvorrichtung und einer Kommunikationseinheit der Ladestation eine autonome Fortbewegung der mobilen Ladestation zur Verbrauchsmaterialhandhabungsvorrichtung erfolgen kann. Mittels der erfindungsgemäßen Ausgestaltung kann vorteilhaft ein zumindest teilweiser autonomer Ladevorgang einer Energiespeichereinheit der Verbrauchsmaterialhandhabungsvorrichtung erreicht werden. Es kann vorteilhaft ein hoher Automatisierungsgrad realisiert werden.

Des Weiteren geht die Erfindung aus von einem Verfahren zu einem Wechsel und/oder zu einer Nachfüllung von zumindest einem Verbrauchsmaterial, das als Verpackungsmaterial ausgebildet ist, an einer Produktions- und/oder Verpackungsmaschine, insbesondere mittels einer, insbesondere erfindungsgemäßen, Verbrauchsmaterialhandhabungsvorrichtung, wobei in zumindest einem Verfahrensschritt mittels einer Verbrauchsmaterialhandhabungsvorrichtung ein autonomer Transport des zumindest einen Verbrauchsmaterials zu der Produktions- und/oder Verpackungsmaschine und/oder ein autonomer Wechselvorgang des zumindest einen Verbrauchsmaterials erfolgt, wobei in zumindest einem Verfahrensschritt ein Zugangsverschlusselement der Produktions- und/oder Verpackungsmaschine mittels der Verbrauchsmaterialhandhabungsvorrichtung autonom geöffnet und/oder geschlossen wird. Es wird vorgeschlagen, dass mittels zumindest einer Verbindungsmittelaufbringungseinheit der Verbrauchsmaterialhandhabungsvorrichtung zumindest ein Verbindungsmittel auf das zumindest eine Verbrauchsmaterial, insbesondere zu einer Ermöglichung einer Verbindung des zumindest einen Verbrauchsmaterials mit einem weiteren Verbrauchsmaterial, aufgebracht wird, wobei ein als Klebemittel, insbesondere als Klebeband, ausgebildetes Verbindungsmittel auf das zumindest eine Verbrauchsmaterial aufgebracht wird. Es ist denkbar, dass in zumindest einem Verfahrensschritt lediglich ein autonomer Wechselvorgang des zumindest einen Verbrauchsmaterials erfolgt, wobei das Verbrauchsmaterial von einem Bediener anlieferbar ist, insbesondere mittels einer separaten Bereitstellungs- und/oder Lagereinheit, die mobil ausgebildet ist, insbesondere manuell von einem Bediener verfahrbar ausgebildet ist. Es ist jedoch auch denkbar, dass die Bereitstellungs- und/oder Lagereinheit mobil ausgebildet ist und autonom fortbewegbar ausgebildet ist, wobei in zumindest einem Verfahrensschritt ein autonomer Transport von Verbrauchsmaterial mittels der Bereitstellungs- und/oder Lagereinheit zu der in einem Nahbereich der Produktions- und/oder Verpackungsmaschine angeordneten Handhabungseinheit erfolgt und in zumindest einem Verfahrensschritt ein autonomer Wechselvorgang des zumindest einen Verbrauchsmaterials mittels der Handhabungseinheit erfolgt. Weitere, einem Fachmann als sinnvoll erscheinende Verfahrensschritte zu einem Wechsel und/oder zu einer Nachfüllung von zumindest einem Verbrauchsmaterial mittels der Verbrauchsmaterialhandhabungsvorrichtung sind ebenfalls denkbar. Mittels der erfindungsgemäßen Ausgestaltung kann vorteilhaft eine bedienerfreundliche Handhabung von Verbrauchsmaterial, insbesondere von Verpackungsmaterial, ermöglicht werden. Es können/kann vorteilhaft eine bedienerunterstützende Handhabung und/oder ein bedienerunterstützender Transport von Verbrauchsmaterial, insbesondere von Verpackungsmaterial, ermöglicht werden. Es kann vorteilhaft eine Entlastung eines Bedieners realisiert werden. Es kann vorteilhaft ein hoher Automatisierungsgrad ermöglicht werden. Mittels der erfindungsgemäßen Ausgestaltung kann vorteilhaft ein zumindest teilweiser autonomer Wechselvorgang von Verbrauchsmaterial erreicht werden. Es kann vorteilhaft ein hoher Automatisierungsgrad realisiert werden.

Die erfindungsgemäße Verbrauchsmaterialhandhabungsvorrichtung, das erfindungsgemäße Produktions- und/oder Verpackungssystem und/oder das erfindungsgemäße Verfahren sollen/soll hierbei nicht auf die oben beschriebene Anwendung und Ausführungsform beschränkt sein. Insbesondere können/kann die erfindungsgemäße Verbrauchsmaterialhandhabungsvorrichtung, das erfindungsgemäße Produktions- und/oder Verpackungssystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten. Zudem sollen alle Merkmale, die hinsichtlich der erfindungsgemäßen Vorrichtung offenbart werden, auch als zum erfindungsgemäßen Verfahren offenbart gelten und umgekehrt.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Produktions- und/oder Verpackungssystem mit zumindest einer Produktions- und/oder Verpackungsmaschine und mit zumindest einer erfindungsgemäßen Verbrauchsmaterialhandhabungsvorrichtung in einer schematischen Darstellung,
- Fig. 2: das erfindungsgemäßes Produktions- und/oder Verpackungssystem bei einem Wechselvorgang von Verbrauchsmaterial mittels der erfindungsgemäßen Verbrauchsmaterialhandhabungsvorrichtung in einer schematischen Darstellung,
- Fig. 3: eine Detailansicht einer Bereitstellungs- und/oder Lagereinheit der erfindungsgemäßen Verbrauchsmaterialhandhabungsvorrichtung in einer schematischen Darstellung,
- Fig. 4: ein alternatives erfindungsgemäßes Produktions- und/oder Verpackungssystem mit zumindest einer Produktions- und/oder Verpackungsmaschine und mit zumindest einer erfindungsgemäßen Verbrauchsmaterialhandhabungsvorrichtung in einer schematischen Darstellung,
- Fig. 5: ein Lagerbereich von Verbrauchsmaterial des alternativen erfindungsgemäßen Produktions- und/oder Verpackungssystems in einer schematischen Darstellung und
- Fig. 6: Ausgestaltungsvarianten einer Handhabungseinheit einer erfindungsgemäßen Verbrauchsmaterialhandhabungsvorrichtung in einer schematischen Darstellung.

### Beschreibung der Ausführungsbeispiele

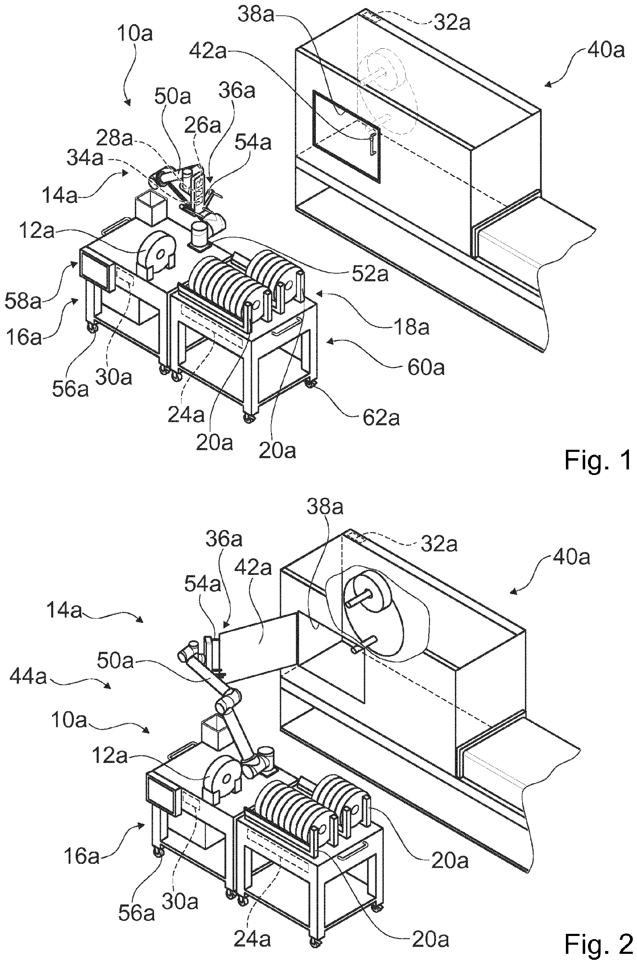

Figur 1 zeigt ein Produktions- und/oder Verpackungssystem 44a mit zumindest einer Produktions- und/oder Verpackungsmaschine 40a und mit zumindest einer Verbrauchsmaterialhandhabungsvorrichtung 10a zu einer Belieferung und/oder Bestückung der Produktions- und/oder Verpackungsmaschine 40a mit zumindest einem Verbrauchsmaterial 12a. Das Verbrauchsmaterial 12a ist vorzugsweise als Rollenware ausgebildet, insbesondere als Verpackungsfolienrollenware. Mittels des Verbrauchsmaterials 12a sind vorzugsweise Produkte (hier nicht näher dargestellt), wie beispielsweise Lebensmittel, insbesondere Schokoriegel, o. dgl., während eines Produktions- und/oder Verpackungsprozesses der Produktions- und/oder Verpackungsmaschine 40a verpackbar. Die Produktions- und/oder Verpackungsmaschine 40a kann bevorzugt eine Schlauchbeutelverpackungseinheit aufweisen, die zu einem Verpacken von Produkten mittels des Verbrauchsmaterials 12a vorgesehen ist. Es ist jedoch auch denkbar, dass die Produktions- und/oder Verpackungsmaschine 40a eine andere, einem Fachmann als sinnvoll erscheinende Verpackungseinheit aufweist, die dazu vorgesehen ist, Produkte während eines Produktions- und/oder Verpackungsprozesses der Produktions- und/oder Verpackungsmaschine 40a mittels des Verbrauchsmaterials 12a zu verpacken. Das Verbrauchsmaterial 12a ist vorzugsweise als Rollenware ausgebildet, die an der Produktions- und/oder Verpackungsmaschine 40a zu einer Verpackung von Produkten anordenbar ist. Das Verbrauchsmaterial 12a ist auf eine, einem Fachmann bereits bekannte Art und Weise mittels der Produktions- und/oder Verpackungsmaschine 40a, insbesondere der Schlauchbeutelverpackungseinheit, zu einer Verpackung von Produkten verarbeitbar.

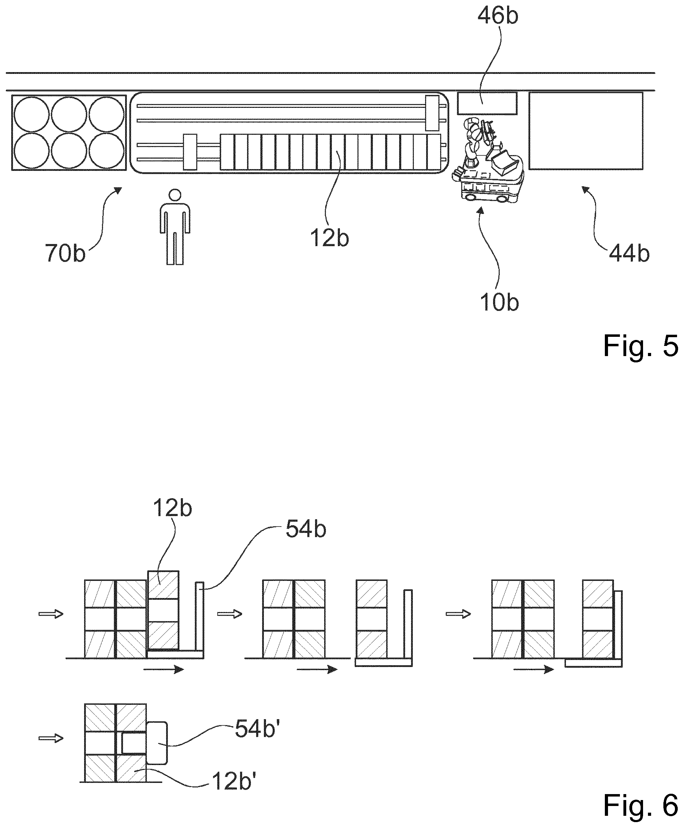

Zu einem Transport und/oder einer Handhabung des zumindest einen Verbrauchsmaterials 12a umfasst das Produktions- und/oder Verpackungssystem 44a vorzugsweise die zumindest eine Verbrauchsmaterialhandhabungsvorrichtung 10a. Es ist auch denkbar, dass das Produktions- und/oder Verpackungssystem 44a eine von eins abweichende Anzahl an Verbrauchsmaterialhandhabungsvorrichtungen 10a zu einem Transport und/oder einer Handhabung des zumindest einen Verbrauchsmaterials 12a aufweist. Die Verbrauchsmaterialhandhabungsvorrichtung 10a ist vorzugsweise dazu vorgesehen, Verbrauchsmaterial 12a an der Produktions- und/oder Verpackungsmaschine 40a zu wechseln und/oder nachzufüllen. Die Verbrauchsmaterialhandhabungsvorrichtung 10a zu einem Transport und/oder zu einer Handhabung von dem zumindest einen Verbrauchsmaterial 12a, insbesondere eines Verpackungsmaterials, umfasst zumindest eine zumindest teilweise autonome Handhabungseinheit 14a, die zumindest dazu vorgesehen ist, das Verbrauchsmaterial 12a handzuhaben. Die Verbrauchsmaterialhandhabungsvorrichtung 10a umfasst ferner zumindest eine Mobilitätseinheit 16a, an der die Handhabungseinheit 14a angeordnet ist und die zumindest dazu vorgesehen ist, eine Fortbewegung der Handhabungseinheit 14a zu ermöglichen. Die Handhabungseinheit 14a umfasst vorzugsweise zumindest einen Roboterarm 50a, insbesondere einen mehrachsigen Roboterarm 50a. Der Roboterarm 50a ist vorzugsweise mittels eine Grundplatte 52a der Handhabungseinheit 14a an der Mobilitätseinheit 16a, insbesondere an einem Gestell oder einem Rahmen der Mobilitätseinheit 16a, angeordnet. Bevorzugt weist der Roboterarm 50a mehr als eine Bewegungsachse auf. Vorzugsweise weist der Roboterarm 50a mehr als zwei, insbesondere mehr als vier und bevorzugt mehr als sechs, Bewegungsachsen auf. Die Handhabungseinheit 14a umfasst bevorzugt zumindest ein am Roboterarm 50a angeordnetes Handhabungselement 54a. Das Handhabungselement 54a kann beispielsweise als ein am Roboterarm 50a angeordneter Greifer, eine am Roboterarm 50a angeordnete Aufnahmegabel, ein am Roboterarm 50a angeordneter Aufnahmedorn o. dgl. ausgebildet sein (vgl. beispielsweise auch Figur 6). Das Handhabungselement 54a ist vorzugsweise beweglich gelagert, insbesondere mittels des Roboterarms 50a. Die Handhabungseinheit 14a ist vorzugsweise dazu vorgesehen, Verbrauchsmaterial 12a, insbesondere Verpackungsmaterial, handzuhaben, insbesondere zumindest teilweise autonom der Produktions- und/oder Verpackungsmaschine 40a zuzuführen. Die Handhabungseinheit 14a ist vorzugsweise dazu vorgesehen, Verpackungsfolienrollen handzuhaben, insbesondere zumindest teilweise autonom der Produktions- und/oder Verpackungsmaschine 40a zuzuführen und/oder von dieser abzuführen. Vorzugsweise ist die Handhabungseinheit 14a dazu vorgesehen, zumindest teilweise autonom der Produktions- und/oder Verpackungsmaschine 40a volle Verpackungsfolienrollen zuzuführen und/oder von der Produktions- und/oder Verpackungsmaschine 40a leere Verpackungsfolienrollen abzuführen. Es ist jedoch auch denkbar, dass die Handhabungseinheit 14a zu einer Handhabung eines anderen, einem Fachmann als sinnvoll erscheinenden Verbrauchsmaterials 12a vorgesehen ist, wie beispielsweise zu einer Handhabung eines als Leim, als Kleber, als Kartonrohling, als Filmrolle, als Papierrohling, als Kartonrolle, als Papier-Leaflet o. dgl. ausgebildeten Verbrauchsmaterials 12a.

Die Mobilitätseinheit 16a umfasst vorzugsweise zumindest ein als Rolle oder Rad ausgebildetes Rollelement 56a, mittels dessen die Handhabungseinheit 14a relativ zu einem Untergrund fortbewegbar ist. Das Rollelement 56a kann als Smartwheel ausgebildet sein, das eine integrierte Antriebseinheit und eine integrierte Sensoreinheit aufweist, um einen Bediener bei einem Schiebe- oder Ziehvorgang der Mobilitätseinheit 16a und/oder der Handhabungseinheit 14a auf eine, einem Fachmann bereits bekannte Art und Weise zu unterstützen. Die Mobilitätseinheit 16a umfasst vorzugsweise zumindest das Gestell oder der Rahmen, an dem die Handhabungseinheit 14a angeordnet ist, insbesondere zumindest teilweise daran fixiert ist. Vorzugsweise umfasst die Mobilitätseinheit 14a zumindest vier Rollelemente 56a, die an dem Gestell oder dem Rahmen der Mobilitätseinheit 16a angeordnet sind. Es ist jedoch auch denkbar, dass die Mobilitätseinheit 14a eine von vier abweichende Anzahl an Rollelementen 56a aufweist. Die Mobilitätseinheit 14a ist durch eine Krafteinwirkung von einem Bediener fortbewegbar, insbesondere entkoppelt von einer Unterstützung durch eine Antriebseinheit, wie beispielsweise eine Elektromotoreinheit o. dgl. Eine Energieversorgung der Handhabungseinheit 14a und/oder weiteren Einheiten der Verbrauchsmaterialhandhabungsvorrichtung 10a ist mittels einer kabelgebundenen Energieverbindung und/oder durch eine an der Handhabungseinheit 14a und/oder an der Mobilitätseinheit 16a angeordnete Energiespeichereinheit, insbesondere Akkupackeinheit, erreichbar. Die Handhabungseinheit 14a umfasst vorzugsweise zumindest eine Bedieneinheit 58a. Die Bedieneinheit 58a ist vorzugsweise an der Mobilitätseinheit 16a angeordnet. Die Bedieneinheit 58a ist vorzugsweise als berührungsempfindliches Display ausgebildet. Es ist jedoch auch denkbar, dass die Bedieneinheit 58a eine andere, einem Fachmann als sinnvoll erscheinende Ausgestaltung aufweist.

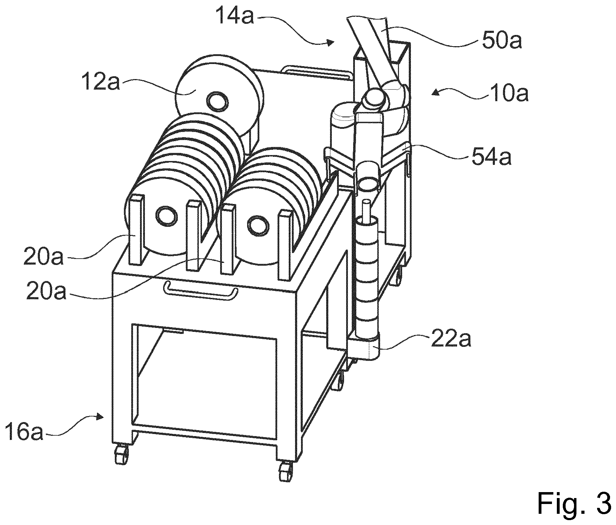

Die Verbrauchsmaterialhandhabungsvorrichtung 10a umfasst zumindest eine Bereitstellungs- und/oder Lagereinheit 18a, die zumindest ein Aufnahmeelement 20a, 22a aufweist, an dem zumindest das mittels der Handhabungseinheit 14a handzuhabende Verbrauchsmaterial 12a anordenbar, insbesondere bereitstellbar und/oder lagerbar ist. Insbesondere weist die Bereitstellungs- und/oder Lagereinheit 18a eine Vielzahl an Aufnahmeelementen 20a, 22a auf, an denen zumindest das mittels der Handhabungseinheit 14a handzuhabende Verbrauchsmaterial 12a anordenbar ist. Zumindest eines der Aufnahmeelemente 20a, 22a ist zu einer Bereitstellung und/oder Lagerung von neuem, in die Produktions- und/oder Verpackungsmaschine 40a einzubringenden Verbrauchsmaterial 12a vorgesehen. Zumindest eines der Aufnahmeelemente 20a, 22a ist zu einer Bereitstellung und/oder Lagerung von aus der Produktions- und/oder Verpackungsmaschine 40a entnommener Leerrollen vorgesehen (Figuren 2 und 3). Die Leerrollen sind vorzugsweise Trägerelemente, an denen Verbrauchsmaterial 12a zu einer Bereitstellung angeordnet ist. Nach einem Verbrauch des Verbrauchsmaterials 12a durch die Produktions- und/oder Verpackungsmaschine 40a bleiben die Leerrollen übrig, die mittels der Handhabungseinheit 14a aus der Produktions- und/oder Verpackungsmaschine 40a entnehmbar sind und durch neues Verbrauchsmaterial 12a auswechselbar sind, wie dies einem Fachmann bereits bekannt ist.

Die Bereitstellungs- und/oder Lagereinheit 18a ist vorzugsweise an einer weiteren Mobilitätseinheit 60a der Verbrauchsmaterialhandhabungsvorrichtung 10a angeordnet. Die weitere Mobilitätseinheit 60a umfasst vorzugsweise zumindest ein als Rolle oder Rad ausgebildetes weiteres Rollelement 62a, mittels dessen die Bereitstellungs- und/oder Lagereinheit 18a relativ zu einem Untergrund fortbewegbar ist. Das weitere Rollelement 62a kann als Smartwheel ausgebildet sein, das eine integrierte Antriebseinheit und eine integrierte Sensoreinheit aufweist, um einen Bediener bei einem Schiebe- oder Ziehvorgang der weiteren Mobilitätseinheit 60a auf eine, einem Fachmann bereits bekannte Art und Weise zu unterstützen. Die weitere Mobilitätseinheit 60a umfasst vorzugsweise zumindest das Gestell oder den Rahmen, an dem die Bereitstellungs- und/oder Lagereinheit 18a angeordnet ist, insbesondere zumindest teilweise daran fixiert ist. Vorzugsweise umfasst die weitere Mobilitätseinheit 60a zumindest vier weitere Rollelemente 62a, die an dem Gestell oder dem Rahmen der weiteren Mobilitätseinheit 60a angeordnet sind. Es ist jedoch auch denkbar, dass die weitere Mobilitätseinheit 60a eine von vier abweichende Anzahl an weiteren Rollelementen 62a aufweist. Die weitere Mobilitätseinheit 60a ist durch eine Krafteinwirkung von einem Bediener fortbewegbar, insbesondere entkoppelt von einer Unterstützung durch eine Antriebseinheit, wie beispielsweise eine Elektromotoreinheit o. dgl. Es ist jedoch auch denkbar, dass die weitere Mobilitätseinheit 60a als autonom fortbewegbare Mobilitätseinheit ausgebildet ist. Die weitere Mobilitätseinheit 60a ist vorzugsweise mit der Mobilitätseinheit 16a verbindbar, insbesondere zu einer gemeinsamen Fortbewegung der Mobilitätseinheit 16a und der weiteren Mobilitätseinheit 60a.

Die Verbrauchsmaterialhandhabungsvorrichtung 10a umfasst zumindest die Bereitstellungs- und/oder Lagereinheit 18a und zumindest eine Messeinheit 24a, die an der Bereitstellungs- und/oder Lagereinheit 18a angeordnet ist und zu einer Bestimmung einer Masse des zumindest einen Verbrauchsmaterials 12a vorgesehen ist. Die Messeinheit 24a ist vorzugsweise an zumindest einem der Aufnahmeelemente 20a, 22a der Bereitstellungs- und/oder Lagereinheit 18a angeordnet. Es ist jedoch auch denkbar, dass die Messeinheit 24a alternativ oder zusätzlich zumindest teilweise an der Handhabungseinheit 14a angeordnet ist. Die Messeinheit 24a ist vorzugsweise dazu vorgesehen, eine Masse des zumindest einen Verbrauchsmaterials 12a in einem der Aufnahmeelemente 20a, 22a angeordneten Zustand des zumindest einen Verbrauchsmaterials 12a zu bestimmen. Es ist jedoch auch denkbar, dass die Messeinheit 24a dazu vorgesehen ist, eine Masse des zumindest einen Verbrauchsmaterials 12a in einem an der Handhabungseinheit 14a angeordneten Zustand zu bestimmen.

Die Verbrauchsmaterialhandhabungsvorrichtung 10a weist zumindest eine Erfassungseinheit 26a zu einer Erfassung zumindest einer materialspezifischen Kenngröße des zumindest einen Verbrauchsmaterials 12a auf. Die Erfassungseinheit 26a ist vorzugsweise zumindest teilweise an der Handhabungseinheit 14a angeordnet. Es ist jedoch auch denkbar, dass die Erfassungseinheit 26a alternativ oder zusätzlich zumindest teilweise an der Bereitstellungs- und/oder Lagereinheit 18a angeordnet ist. Die Erfassungseinheit 26a kann dazu vorgesehen sein, beispielsweise einen Anfang eines als Verpackungsfolienrolle ausgebildeten Verbrauchsmaterials 12a, eine Position eines Klebebands an einem als Verpackungsfolienrolle ausgebildeten Verbrauchsmaterials 12a, eine Position einer Verbindungsstelle eines als Verpackungsfolienrolle ausgebildeten Verbrauchsmaterials 12a, einen am Verbrauchsmaterial 12a angebrachten maschinenlesbaren Code, eine Dichte des Verbrauchsmaterials 12a, eine Art des Verbrauchsmaterials 12a, eine Beschädigungsstelle des Verbrauchsmaterials 12a o. dgl. zu erfassen. Die Erfassungseinheit 26a kann eine Vielzahl an Erfassungselementen (hier nicht näher dargestellt) aufweisen, die zu einer Erfassung von unterschiedlichen materialspezifischen Kenngrößen des zumindest einen Verbrauchsmaterials 12a vorgesehen sind.

Die Verbrauchsmaterialhandhabungsvorrichtung 10a weist zumindest eine Verbindungsmittelaufbringungseinheit 28a auf, die dazu vorgesehen ist, zumindest ein Verbindungsmittel auf das zumindest eine Verbrauchsmaterial 12a aufzubringen, insbesondere zu einer Ermöglichung einer Verbindung des zumindest einen Verbrauchsmaterials 12a mit einem bereits in der Produktions- und/oder Verpackungsmaschine 40a angeordneten weiteren Verbrauchsmaterial. Die Verbindungsmittelaufbringungseinheit 28a ist vorzugsweise als Klebebandaufbringungseinheit ausgebildet, die dazu vorgesehen ist, ein als Klebeband ausgebildetes Verbindungsmittel an einem Ende des zumindest einen Verbrauchsmaterials 12a anzubringen, insbesondere um einen vorteilhaften Splicevorgang des Verbrauchsmaterials 12a und des weiteren Verbrauchsmaterials zu ermöglichen.

Die Verbrauchsmaterialhandhabungsvorrichtung 10a umfasst zumindest eine, insbesondere drahtlose, Kommunikationseinheit 30a zu einem Austausch von elektronischen Daten mit einer externen Einheit 32a, wobei in Abhängigkeit von einem Austausch von elektronischen Daten zumindest eine Handhabung und/oder ein Transport des zumindest einen Verbrauchsmaterials 12a erfolgt. Die externe Einheit 32a ist bevorzugt ein Teil der Produktions- und/oder Verpackungsmaschine 40a. In Abhängigkeit von einer Übertragung von elektronischen Daten zwischen der Kommunikationseinheit 30a und der externen Einheit 32a ist eine Handhabung und/oder ein Transport des zumindest einen Verbrauchsmaterials 12a mittels der Verbrauchsmaterialhandhabungsvorrichtung 10a steuerbar und/oder regelbar.

Die Verbrauchsmaterialhandhabungsvorrichtung 10a umfasst zumindest eine Umverpackungsöffnungseinheit 34a, insbesondere eine Schneid- und/oder Brennereinheit, die zu einer Öffnung zumindest einer das zumindest eine Verbrauchsmaterial 12a zumindest teilweise umgebenden Umverpackung, insbesondere einer Schutzfolie, vorgesehen ist. Die Umverpackungsöffnungseinheit 34a ist vorzugsweise zumindest teilweise an der Handhabungseinheit 14a angeordnet. Es ist jedoch auch denkbar, dass die Umverpackungsöffnungseinheit 34a zumindest teilweise an der Mobilitätseinheit 16a angeordnet ist, insbesondere beweglich an der Mobilitätseinheit 16a gelagert ist. Vorzugsweise ist zumindest ein Schneidelement der Umverpackungsöffnungseinheit 34a an der Handhabungseinheit 14a und/oder an der Mobilitätseinheit 16a angeordnet, insbesondere beweglich gelagert.

Die Verbrauchsmaterialhandhabungsvorrichtung 10a umfasst zumindest eine Zugangsöffnungseinheit 36a, die dazu vorgesehen ist, eine Position einer Zugangsöffnung 38a zu einer Produktions- und/oder Verpackungsmaschine 40a zu erfassen und zumindest ein die Zugangsöffnung 38a der Produktions- und/oder Verpackungsmaschine 40a verschließendes Zugangsverschlusselement 42a zu betätigen (vgl. Figur 2). Die Zugangsöffnungseinheit 36a ist vorzugsweise zumindest teilweise an der Handhabungseinheit 14a angeordnet.

Bei einem Verfahren zu einem Wechsel und/oder zu einer Nachfüllung von zumindest einem Verbrauchsmaterial 12a an der Produktions- und/oder Verpackungsmaschine 40a mittels der Verbrauchsmaterialhandhabungsvorrichtung 10a erfolgt in zumindest einem Verfahrensschritt mittels der Verbrauchsmaterialhandhabungsvorrichtung 10a ein autonomer Transport des zumindest einen Verbrauchsmaterials 12a zu der Produktions- und/oder Verpackungsmaschine 40a, insbesondere von der Bereitstellungs- und/oder Lagereinheit 18a zu der Produktions- und/oder Verpackungsmaschine 40a, und/oder ein autonomer Wechselvorgang des zumindest einen Verbrauchsmaterials 12a an der Produktions- und/oder Verpackungsmaschine 40a. In zumindest einem Verfahrensschritt wird das Zugangsverschlusselement 42a der Produktions- und/oder Verpackungsmaschine 40a mittels der Verbrauchsmaterialhandhabungsvorrichtung 10a, insbesondere mittels der Handhabungseinheit 14a, autonom geöffnet oder geschlossen.

Hinsichtlich weiterer Verfahrensschritte des Verfahrens zu einem Wechsel und/oder zu einer Nachfüllung von zumindest einem Verbrauchsmaterial 12a an der Produktions- und/oder Verpackungsmaschine 40a mittels der Verbrauchsmaterialhandhabungsvorrichtung 10a darf auf die vorhergehende Beschreibung des Produktions- und/oder Verpackungssystems 44a verwiesen werden, da diese Beschreibung analog auch auf das Verfahren zu lesen ist und somit alle Merkmale hinsichtlich des Produktions- und/oder Verpackungssystem 44a auch in Bezug auf das Verfahren zu einem Wechsel und/oder zu einer Nachfüllung von zumindest einem Verbrauchsmaterial 12a an der Produktions- und/oder Verpackungsmaschine 40a mittels der Verbrauchsmaterialhandhabungsvorrichtung 10a als offenbart gelten und umgekehrt.

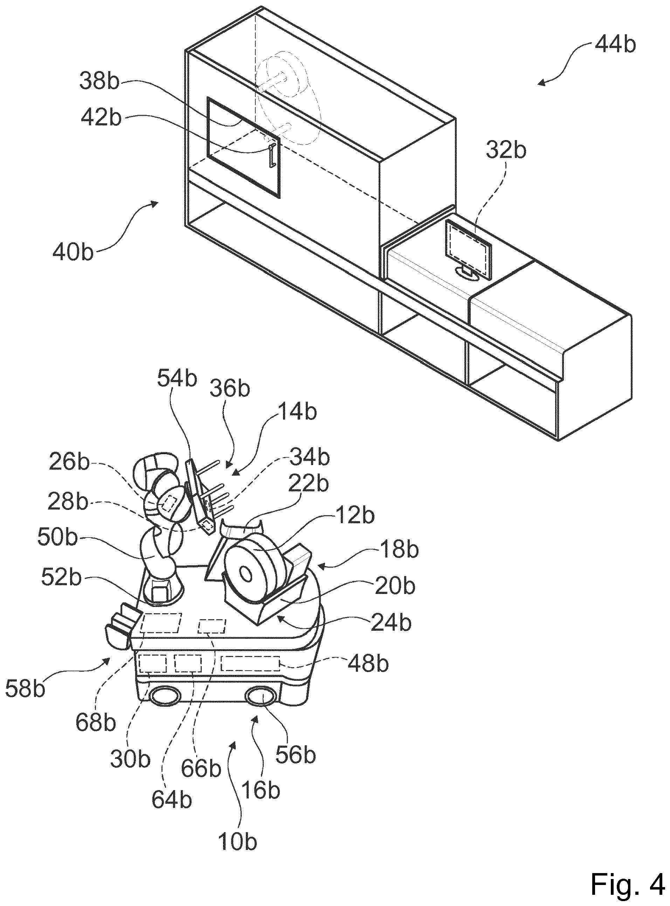

In Figuren 4 bis 6 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 bis 3, verwiesen werden kann. Zur Unterscheidung der Ausführungsbeispiele ist der Buchstabe a in den Bezugszeichen des Ausführungsbeispiels der Figuren 1 bis 3 durch den Buchstaben b in den Bezugszeichen der Ausführungsbeispiele der Figuren 4 bis 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 bis 3, verwiesen werden.

Figur 4 zeigt ein Produktions- und/oder Verpackungssystem 44b mit zumindest einer Produktions- und/oder Verpackungsmaschine 40b und mit zumindest einer Verbrauchsmaterialhandhabungsvorrichtung 10b zu einer Belieferung und/oder Bestückung der Produktions- und/oder Verpackungsmaschine 40b mit zumindest einem Verbrauchsmaterial 12b. Die Verbrauchsmaterialhandhabungsvorrichtung 10b zu einem Transport und/oder zu einer Handhabung von zumindest einem Verbrauchsmaterial 12b, insbesondere eines Verpackungsmaterials, umfasst zumindest eine zumindest teilweise autonome Handhabungseinheit 14b, die zumindest dazu vorgesehen ist, das Verbrauchsmaterial 12b handzuhaben. Ferner umfasst die Verbrauchsmaterialhandhabungsvorrichtung 10b zumindest eine, insbesondere zumindest teilweise autonome, Mobilitätseinheit 16b, an der die Handhabungseinheit 14b angeordnet ist und die zumindest dazu vorgesehen ist, eine, insbesondere zumindest teilweise autonome, Fortbewegung der Handhabungseinheit 14b zu ermöglichen. Vorzugsweise weist die Mobilitätseinheit 16b im Unterschied zu der Mobilitätseinheit 16a aus den Figuren 1 bis 3 zu einer zumindest teilweise autonomen Fortbewegung der Handhabungseinheit 14b vorgesehen. Die Mobilitätseinheit 16b umfasst vorzugsweise zumindest eine Antriebseinheit 64b, insbesondere zumindest eine Elektromotoreinheit, zu einem Antrieb zumindest eines Rollelements 56b der Mobilitätseinheit 16b. Die Verbrauchsmaterialhandhabungsvorrichtung 10b umfasst zumindest eine Energiespeichereinheit 48b zu einer Energieversorgung von Einheiten der Verbrauchsmaterialhandhabungsvorrichtung 10b. Die Energiespeichereinheit 48b ist vorzugsweise als wiederaufladbare Akkueinheit ausgebildet. Die Verbrauchsmaterialhandhabungsvorrichtung 10b umfasst vorzugsweise zumindest eine Sensoreinheit 68b, die dazu vorgesehen ist, Umgebungskenngrößen zu erfassen, die von einer Recheneinheit 66b der Verbrauchsmaterialhandhabungsvorrichtung 10b zumindest zu einer Steuerung und/oder Regelung eines autonomen Fahrbetriebs der Mobilitätseinheit 16b verarbeitbar sind.

Das Produktions- und/oder Verpackungssystem 44b umfasst zumindest eine Ladestation 46b, die dazu vorgesehen ist, eine Energiespeichereinheit 48b der Verbrauchsmaterialhandhabungsvorrichtung 10b mit Energie zu versorgen (vgl. Figur 5). Die Ladestation 46b ist vorzugsweise als stationäre Ladestation ausgebildet. Es ist jedoch auch denkbar, dass die Ladestation 46b mobil ausgebildet ist und zumindest teilweise autonom fortbewegbar ist. Die Ladestation 46b kann als kontaktlose Ladestation, wie beispielsweise als Induktionsladestation, oder als Kontaktladestation, die insbesondere zumindest eine Ladekontakteinheit aufweist, ausgebildet sein. Die Verbrauchsmaterialhandhabungsvorrichtung 10b ist vorzugsweise dazu vorgesehen, bei einer Erkennung einer geringen Energiekapazität der Energiespeichereinheit 48b autonom die Ladestation 46b anzufahren und einen Ladevorgang zu initiieren.

Eine Bereitstellungs- und/oder Lagereinheit 18b der Verbrauchsmaterialhandhabungsvorrichtung 10b ist vorzugsweise an der Mobilitätseinheit 16b angeordnet. Alternativ oder zusätzlich ist denkbar, dass das Produktions- und/oder Verpackungssystem 44b zumindest ein weitere Bereitstellungs- und/oder Lagereinheit 70b aufweist, an der zumindest das mittels der Handhabungseinheit 14b handzuhabende Verbrauchsmaterial 12b anordenbar, insbesondere bereitstellbar und/oder lagerbar ist (vgl. Figur 5).

In Figur 6 sind Ausführungsvarianten eines Handhabungselements 54b der Handhabungseinheit 14b dargestellt. Das Handhabungselement 54b ist in einer Ausführungsvariante als Aufnahmegabel ausgebildet (vgl. oberen Teil der Figur 6), um das Verbrauchsmaterial 12b handzuhaben. In einer weiteren Ausführungsvariante ist das Handhabungselement 54b' als Handhabungsdorn, insbesondere als beweglicher Spanndorn, ausgebildet (vgl. unteren Teil der Figur 6).

Hinsichtlich weiterer Funktionen und Merkmale des Produktions- und/oder Verpackungssystem 44b darf auf die Beschreibung des Produktions- und/oder Verpackungssystems 44a in den Figuren 1 bis 3 verwiesen werden.

## Patentansprüche

1. Verbrauchsmaterialhandhabungsvorrichtung zu einem Transport und/oder zu einer Handhabung von zumindest einem Verbrauchsmaterial (12a; 12b), das als Verpackungsmaterial ausgebildet ist, mit zumindest einer zumindest teilweise autonomen Handhabungseinheit (14a; 14b), die zumindest dazu vorgesehen ist, das Verbrauchsmaterial (12a; 12b) handzuhaben, mit zumindest einer, insbesondere zumindest teilweise autonomen, Mobilitätseinheit (16a; 16b), an der die Handhabungseinheit (14a; 14b) angeordnet ist und die zumindest dazu vorgesehen ist, eine, insbesondere zumindest teilweise autonome, Fortbewegung der Handhabungseinheit (14a; 14b) zu ermöglichen, und mit zumindest einer Zugangsöffnungseinheit (36a; 36b), die dazu vorgesehen ist, eine Position einer Zugangsöffnung (38a; 38b) zu einer Produktions- und/oder Verpackungsmaschine (40a; 40b) zu erfassen und zumindest ein die Zugangsöffnung (38a; 38b) der Produktions- und/oder Verpackungsmaschine (40a; 40b) verschließendes Zugangsverschlusselement (42a; 42b) zu betätigen, **gekennzeichnet durch** zumindest eine Verbindungsmittelaufbringungseinheit (28a; 28b), die dazu vorgesehen ist, zumindest ein Verbindungsmittel auf das zumindest eine Verbrauchsmaterial (12a; 12b) aufzubringen, insbesondere zu einer Ermöglichung einer Verbindung des zumindest einen Verbrauchsmaterials (12a; 12b) mit einem weiteren Verbrauchsmaterial, wobei die Verbindungsmittelaufbringungseinheit (28a; 28b) dazu vorgesehen ist, ein als Klebemittel, insbesondere Klebeband, ausgebildetes Verbindungsmittel auf das zumindest eine Verbrauchsmaterial (12a; 12b) aufzubringen, insbesondere um nach einer, insbesondere zumindest teilweisen autonomen, Zuführung des Verbrauchsmaterials (12a; 12b) zur Produktions- und/oder Verpackungsmaschine das zugeführte Verbrauchsmaterial (12a; 12b) mit einem bereits in der Produktions- und/oder Verpackungsmaschine angeordneten weiteren Verbrauchsmaterial (12a; 12b) zu verbinden.

2. Verbrauchsmaterialhandhabungsvorrichtung nach Anspruch 1, **gekennzeichnet durch** zumindest eine Bereitstellungs- und/oder Lagereinheit (18a; 18b), die zumindest ein Aufnahmeelement (20a, 22a; 20b, 22b) aufweist, an dem zumindest das mittels der Handhabungseinheit (14a; 14b) handzuhabende Verbrauchsmaterial (12a; 12b) anordenbar, insbesondere bereitstellbar und/oder lagerbar ist.

3. Verbrauchsmaterialhandhabungsvorrichtung nach Anspruch 1 oder 2, **gekennzeichnet durch** zumindest eine Bereitstellungs- und/oder Lagereinheit (18a; 18b) und zumindest eine Messeinheit (24a; 24b), die an der Bereitstellungs- und/oder Lagereinheit (18a; 18b) angeordnet ist und zu einer Bestimmung einer Masse des zumindest einen Verbrauchsmaterials (12a; 12b) vorgesehen ist.

4. Verbrauchsmaterialhandhabungsvorrichtung nach einem der vorhergehenden Ansprüche, **gekennzeichnet durch** zumindest eine Erfassungseinheit (26a; 26b) zu einer Erfassung zumindest einer materialspezifischen Kenngröße des zumindest einen Verbrauchsmaterials (12a; 12b).

5. Verbrauchsmaterialhandhabungsvorrichtung nach einem der vorhergehenden Ansprüche, **gekennzeichnet durch** zumindest eine, insbesondere drahtlose, Kommunikationseinheit (30a; 30b) zu einem Austausch von elektronischen Daten mit einer externen Einheit (32a; 32b), wobei in Abhängigkeit von einem Austausch von elektronischen Daten zumindest eine Handhabung und/oder ein Transport des zumindest einen Verbrauchsmaterials (12a; 12b) erfolgt.

6. Verbrauchsmaterialhandhabungsvorrichtung nach einem der vorhergehenden Ansprüche, **gekennzeichnet durch** zumindest eine Umverpackungsöffnungseinheit (34a; 34b), insbesondere eine Schneid- und/oder Brennereinheit, die zu einer Öffnung zumindest einer das zumindest eine Verbrauchsmaterial (12a; 12b) zumindest teilweise umgebenden Umverpackung, insbesondere einer Schutzfolie, vorgesehen ist.

7. Produktions- und/oder Verpackungssystem mit zumindest einer Produktions- und/oder Verpackungsmaschine (40a; 40b) und mit zumindest einer Verbrauchsmaterialhandhabungsvorrichtung nach einem der vorhergehenden Ansprüche zu einer Belieferung und/oder Bestückung der Produktions- und/oder Verpackungsmaschine (40a; 40b) mit zumindest einem Verbrauchsmaterial (12a; 12b).

8. Produktions- und/oder Verpackungssystem nach Anspruch 7, **gekennzeichnet durch** zumindest eine Ladestation (46b), die dazu vorgesehen ist, eine Energiespeichereinheit (48b) der Verbrauchsmaterialhandhabungsvorrichtung mit Energie zu versorgen.

9. Verfahren zu einem Wechsel und/oder zu einer Nachfüllung von zumindest einem Verbrauchsmaterial (12a; 12b), das als Verpackungsmaterial ausgebildet ist, an einer Produktions- und/oder Verpackungsmaschine (40a; 40b), insbesondere mittels einer Verbrauchsmaterialhandhabungsvorrichtung nach einem der Ansprüche 1 bis 6, wobei in zumindest einem Verfahrensschritt mittels einer Verbrauchsmaterialhandhabungsvorrichtung ein autonomer Transport des zumindest einen Verbrauchsmaterials (12a; 12b) zu der Produktions- und/oder Verpackungsmaschine (40a; 40b) und/oder ein autonomer Wechselvorgang des zumindest einen Verbrauchsmaterials (12a; 12b) erfolgt, wobei in zumindest einem Verfahrensschritt ein Zugangsverschlusselement (42a; 42b) der Produktions- und/oder Verpackungsmaschine (40a; 40b) mittels der Verbrauchsmaterialhandhabungsvorrichtung autonom geöffnet wird, **dadurch gekennzeichnet, dass** mittels zumindest einer Verbindungsmittelaufbringungseinheit (28a; 28b) der Verbrauchsmaterialhandhabungsvorrichtung zumindest ein Verbindungsmittel auf das zumindest eine Verbrauchsmaterial (12a; 12b), insbesondere zu einer Ermöglichung einer Verbindung des zumindest einen Verbrauchsmaterials (12a; 12b) mit einem weiteren Verbrauchsmaterial (12a; 12b), aufgebracht wird, wobei ein als Klebemittel, insbesondere als Klebeband, ausgebildetes Verbindungsmittel auf das zumindest eine Verbrauchsmaterial (12a; 12b) aufgebracht wird.

## Claims

1. Consumable-material handling device for a transport and/or for a handling of at least one consumable material (12a; 12b) realized as a packaging material, with at least one at least partially autonomous handling unit (14a; 14b), which is configured at least for a handling of the consumable material (12a; 12b),
with at least one, in particular at least partially autonomous, mobility unit (16a; 16b), which the handling unit (14a; 14b) is arranged on, and which is configured at least to enable an, in particular at least partially autonomous, locomotion of the handling unit (14a; 14b),
and with at least one access opening unit (36a; 36b) that is configured to detect a position of an access opening (38a; 38b) to a production and/or packaging machine (40a; 40b) and to actuate at least one access closure element (42a; 42b) which closes the access opening (38a; 38b) of the production and/or packaging machine (40a; 40b),
**characterised by** at least one connecting agent application unit (28a; 28b), which is configured to apply at least one connecting agent onto the at least one consumable material (12a; 12b), in particular in order to enable a connection of the at least one consumable material (12a; 12b) with a further consumable material,
wherein the connecting agent application unit (28a; 28b) is configured to apply a connecting agent that is embodied as an adhesive agent, in particular as an adhesive tape, onto the at least one consumable material (12a; 12b), in particular in order to - following an, in particular at least partially autonomous, feeding of the consumable material (12a; 12b) to the production and/or packaging machine - connect the fed consumable material (12a; 12b) with a further consumable material (12a; 12b) which is already arranged in the production and/or packaging machine.

2. Consumable-material handling device according to claim 1,
**characterised by** at least one supply and/or storage unit (18a; 18b) comprising at least one receiving element (20a, 22a; 20b, 22b), on which at least the consumable material (12a; 12b) that is to be handled by the handling unit (14a; 14b) can be arranged, in particular provided and/or stored.

3. Consumable-material handling device according to claim 1 or 2,
**characterised by** at least one supply and/or storage unit (18a; 18b) and at least one measuring unit (24a; 24b), which is arranged on the supply and/or storage unit (18a; 18b) and is configured for a determination of a mass of the at least one consumable material (12a; 12b).

4. Consumable-material handling device according to one of the preceding claims, **characterised by** at least one detection unit (26a; 26b) for a detection of at least one material-specific parameter of the at least one consumable material (12a; 12b).

5. Consumable-material handling device according to one of the preceding claims, **characterised by** at least one, in particular wireless, communication unit (30a; 30b) for an exchange of electronic data with an external unit (32a; 32b), wherein depending on an exchange of electronic data at least a handling and/or a transport of the at least one consumable material (12a; 12b) is performed.

6. Consumable-material handling device according to one of the preceding claims, **characterised by** at least one secondary packaging opening unit (34a; 34b), in particular a cutter and/or torch unit, that is configured for opening at least one secondary packaging, in particular a protective film, which at least partially surrounds the at least one consumable material (12a; 12b).

7. Production and/or packaging system with at least one production and/or packaging machine (40a; 40b) and with at least one consumable-material handling device according to one of the preceding claims for supplying and/or loading the production and/or packaging machine (40a; 40b) with at least one consumable material (12a; 12b).

8. Production and/or packaging system according to claim 7,
**characterised by** at least one charging station (46b) that is configured to supply an energy storage unit (48b) of the consumable-material handling device with energy.

9. Method for a replacement and/or for a refill of at least one consumable material (12a; 12b), which is realized as a packaging material, on a production and/or packaging machine (40a; 40b), in particular by a consumable-material handling device according to one of claims 1 to 6,
wherein in at least one method step an autonomous transport of the at least one consumable material (12a; 12b) to the production and/or packaging machine (40a; 40b) and/or an autonomous replacement process of the at least one consumable material (12a; 12b) are/is performed by a consumable-material handling device,
wherein in at least one method step an access closure element (42a; 42b) of the production and/or packaging machine (40a; 40b) is autonomously opened by the consumable-material handling device,
**characterised in that** by means of at least one connecting agent application unit (28a; 28b) of the consumable-material handling device at least one connecting agent is applied onto the at least one consumable material (12a; 12b), in particular in order to enable a connection of the at least one consumable material (12a; 12b) to a further consumable material (12a; 12b),
wherein a connecting agent realized as an adhesive agent, in particular as an adhesive tape, is applied onto the at least one consumable material (12a; 12b).

## Revendications

1. Dispositif à manipulation de matériau consommable pour un transport et/ou pour une manipulation d'au moins un matériau consommable (12a ; 12b) réalisé comme matériau d'emballage, avec au moins une unité de manipulation (14a ; 14b) au moins partiellement autonome, qui est au moins prévue à manipuler le matériau consommable (12a ; 12b),
avec au moins une unité de mobilité (16a ; 16b), en particulier une unité de mobilité (16a ; 16b) au moins partiellement autonome, sur laquelle l'unité de manipulation (14a ; 14b) est disposée et qui est au moins prévue à faciliter un déplacement, en particulier un déplacement au moins partiellement autonome, de l'unité de manipulation (14a ; 14b),
et avec au moins une unité d'ouverture d'accès (36a ; 36b), qui est prévue pour une détection d'une position d'une ouverture d'accès (38a ; 38b) à une machine de production et/ou d'emballage (40a ; 40b) et à actionner au moins un élément de fermeture d'accès (42a ; 42b) qui ferme l'ouverture d'accès (38a ; 38b) de la machine de production et/ou d'emballage (40a ; 40b),
**caractérisé par** au moins une unité d'application d'agent liant (28a ; 28b), qui est prévue à appliquer au moins un agent liant sur l'au moins un matériau consommable (12a ; 12b), en particulier pour une facilitation d'une liaison de l'au moins un matériau consommable (12a ; 12b) avec un matériau consommable de plus,
où l'unité d'application d'agent liant (28a ; 28b) est prévue à appliquer un agent liant réalisé comme agent adhésif, en particulier comme ruban adhésif, sur l'au moins un matériau consommable (12a ; 12b), en particulier de sorte à - suivant une alimentation, en particulier au moins partiellement autonome, du matériau consommable (12a ; 12b) à la machine de production et/ou d'emballage - lier le matériau consommable (12a ; 12b) alimenté avec un matériau consommable de plus (12a ; 12b) déjà disposé dans la machine de production et/ou d'emballage.

2. Dispositif à manipulation de matériau consommable selon la revendication 1, **caractérisé par** au moins une unité de fourniture et/ou de stockage (18a ; 18b) comprenant au moins un élément recevant (20a, 22a ; 20b, 22b) auquel au moins le matériau consommable (12a ; 12b), qui est à être manipulé par l'unité de manipulation (14a ; 14b), peut être disposé, en particulier fourni et/ou stocké.

3. Dispositif à manipulation de matériau consommable selon la revendication 1 ou 2,
**caractérisé par** au moins une unité de fourniture et/ou de stockage (18a ; 18b) et au moins une unité de mesurage (24a ; 24b) disposée sur l'unité de fourniture et/ou de stockage (18a ; 18b) et prévue pour une détermination d'une masse de l'au moins un matériau consommable (12a ; 12b).

4. Dispositif à manipulation de matériau consommable selon l'une des revendications précédentes,
**caractérisé par** au moins une unité de saisie (26a ; 26b) pour saisir au moins un paramètre spécifique de matériau de l'au moins un matériau consommable (12a ; 12b).

5. Dispositif à manipulation de matériau consommable selon l'une des revendications précédentes,
**caractérisé par** au moins une unité de communication (30a ; 30b), en particulier sans fil, pour un échange de données électroniques avec une unité externe (32a ; 32b),
où en dépendance d'un échange de données électroniques, au moins une manipulation et/ou un transport de l'au moins un matériau consommable (12a ; 12b) sont effectués/est effectué.

6. Dispositif à manipulation de matériau consommable selon l'une des revendications précédentes,
**caractérisé par** au moins une unité d'ouverture de suremballage (34a ; 34b), en particulier une unité de coupage et/ou de torche, qui est prévue pour ouvrir au moins un suremballage, en particulier un film protectif, entourant l'au moins un matériau consommable (12a ; 12b).

7. Système de production et/ou d'emballage avec au moins une machine de production et/ou d'emballage (40a ; 40b) et avec au moins un dispositif à manipulation de matériau consommable selon l'une des revendications précédentes pour alimenter et/ou équiper la machine de production et/ou d'emballage (40a ; 40b) d'au moins un matériau consommable (12a ; 12b).

8. Système de production et/ou d'emballage selon la revendication 7, **caractérisé par** au moins une station de charge (46b) prévue à fournir de l'énergie à une unité de stockage d'énergie (48b) du dispositif à manipulation de matériau consommable.

9. Procédé pour un remplacement et/ou pour un remplissement d'au moins un matériau consommable (12a ; 12b), qui est réalisé comme matériau d'emballage, à une machine de production et/ou d'emballage (40a ; 40b), en particulier au moyen d'un dispositif à manipulation de matériau consommable selon l'une des revendications 1 à 6,
où dans au moins une étape de procédé, au moyen d'un dispositif à manipulation de matériau consommable, un transport autonome de l'au moins un matériau consommable (12a ; 12b) à la machine de production et/ou d'emballage (40a ; 40b) et/ou un procès autonome de remplacement de l'au moins un matériau consommable (12a ; 12b) s'effectuent/effectue,
où dans au moins une étape de procédé un élément de fermeture d'accès (42a ; 42b) de la machine de production et/ou d'emballage (40a ; 40b) est ouvert d'une manière autonome au moyen du dispositif à manipulation de matériau consommable,
**caractérisé en ce que** par le biais d'au moins une unité d'application d'agent liant (28a ; 28b) du dispositif à manipulation de matériau consommable au moins un agent liant est appliqué sur l'au moins un matériau consommable (12a ; 12b), en particulier pour une facilitation d'une liaison de l'au moins un matériau consommable (12a ; 12b) avec un matériau consommable de plus (12a ; 12b), où un agent liant réalisé comme agent adhésif, en particulier comme ruban adhésif, est appliqué sur l'au moins un matériau consommable (12a ; 12b).
